# EUROPÄISCHE PATENTSCHRIFT

(11) **EP 0 657 308 B1**
(45) Veröffentlichungstag und Bekanntmachung des Hinweises auf die Patenterteilung: **21.10.1998**
(21) Anmeldenummer: 94118558.9
(22) Anmeldetag: 25.11.1994
(51) Int. Cl.: B44C 1/00, C04B 41/50, C09C 1/00, C03C 8/14

(54) **Pailletten und ihre Verwendung zur Dekoration von Glas, Porzellan und Keramik mit vertikalen Wänden**
Spangles or flakes and their use for decorating glass, porcelain and ceramic surfaces with vertical walls
Paillettes et leur utilisation pour la décoration de surfaces verticales en verre, porcelaine et céramique

(30) Priorität: 08.12.1993 FR 9314729
(43) Veröffentlichungstag der Anmeldung: 14.06.1995
(73) Patentinhaber: CERDEC AKTIENGESELLSCHAFT KERAMISCHE FARBEN, D-60327 Frankfurt (DE)
(72) Erfinder: Suplisson, Jean-Claude, F-87110 Solignac (FR); Bouny, Patrick, F-67000 Limoges (FR); Pons, Xavier, F-87000 Limoges (FR)

(56) Entgegenhaltungen:
- EP-A- 0 492 280
- EP-A- 0 545 166
- EP-A- 0 565 941
- EP-A- 0 606 592
- DE-A- 4 315 174

## Beschreibung

Das Patent betrifft Pailletten zur Dekoration von Glas, Porzellan und Keramik sowie ein Dekorationsverfahren, bei dem diese Pailletten eingesetzt werden. Dieses Dekorationsverfahren ermöglicht es, Gegenstände mit vertikalen Wänden zu dekorieren und bis heute in der Keramik noch nicht bekannte Dekoreffekte zu erzielen.

In der Textil- und Papierindustrie werden Pailletten aus verschiedenen Materialien auf das zu dekorierende Trägermaterial fixiert; unter Pailletten versteht man hauptsächlich feine Partikel in Form von Schuppen unterschiedlicher Größe und Form. Auf Papier werden die Pailletten zum Beispiel durch Aufkleben oder durch Beschichten des mit Pailletten versehenen Papiers mit einem filmbildenden organischen Bindemittel befestigt.

Das Verfahren zur Dekoration von Glas, Porzellan und Keramik mit Hilfe von "pelletisierten" Granalien oder Schuppen aus Glas, die auf eine zu dekorierende Oberfläche aufgetragen und anschließend eingebrannt werden, ist wohlbekannt; der gesuchte Dekoreffekt - Stoffeffekte oder ein Aussehen, das an Natursteine erinnert (zum Beispiel Porphyr oder Marmor) - erweist sich dabei häufig als unzureichend oder wenig veränderbar. Ein weiterer Nachteil dieses Verfahrens zur Dekoration mit pelletisierten Körnchen oder eingefärbten Schuppen besteht darin, daß sie eine Kantenhöhe von bis zu 2 cm erreichen können und somit für vertikale Flächen nicht geeignet sind. Nur Flächen, die während des Dekorationsvorgangs und des Brennens eben und waagerecht sind, eignen sich, wodurch die Anwendung dieses Verfahrens im wesentlichen auf den Bereich der Fliesen beschränkt ist.

Die EP-A 0 565 941 lehrt eine katalytisch aktive Beschichtungszusammensetzung. Sie enthält eine Emailfritte, inerte Substanzen und plättchenförmige Substrate, die eine Umhüllung aus einem oder mehreren Metalloxiden aufweisen. Bei den umhüllten Substraten handelt es sich insbesondere um mit TiO₂, Fe₂O₃ oder anderen Oxiden umhüllte Glimmerblättchen, bei der Zusammensetzung um ein pulverförmiges Material.

Die vorliegende Erfindung betrifft folglich Pailletten, die nach Auftrag auf das Trägermaterial aus Glas, Porzellan oder Keramik und dem Brennen das Dekorationsverfahren verbessern und vereinfachen und auf jeder Art von Trägermaterial mit vertikalen Wänden, einschließlich Glas, Porzellan oder Keramik, glasiert oder unglasiert, zu einem abwechslungsreicheren Dekoreffekt führen.

Diese Aufgabe wird gelöst durch Pailletten zur Dekoration von Glas, Porzellan und Keramik, die dadurch gekennzeichnet sind, daß sie im wesentlichen aus einem organischen Bindemittelsystem und einem dekorbildenden verglasbaren anorganischen Stoff bestehen und erhältlich sind aus einem Film oder Blättern der genannten Zusammensetzung.

Der erfindungsgemäße Einsatz der Pailletten zur Dekoration im Bereich der Keramik und des Glases ermöglicht die Realisierung bisher in der Keramik unbekannter Effekte. Neben der Dekoration von Fliesen ermöglicht er die Dekoration von Gegenständen mit vertikalen Wänden und betrifft somit einen sehr ausgedehnten Bereich der Keramik, zum Beispiel Ziergegenstände aus Glas, Porzellan oder Keramik, Geschirr, Kunstkeramik, Beleuchtungsgegenstände, Grabzubehör, Sanitärobjekte, Email, Schmuckemail.

Die Pailletten können sowohl in ungleichmäßiger Form als auch in gleichmäßiger oder geometrischer Form erhalten werden, indem ein Film oder Blättchen mit der beanspruchten Zusammensetzung gebrochen oder zerschnitten werden. Die Blättchen und somit auch die Pailletten können eine Dicke von 25 bis 1000 x 10⁻⁶m besitzen, vorzugsweise eine solche von 25 bis 500 x 10⁻⁶m. Die Größe der Pailletten wird anschließend auf 0,1 mm bis 30 mm oder mehr eingestellt. Bei der Anwendung können Pailletten unterschiedlicher Größe und verschiedener Farben gemischt werden, so daß die Kombinationsmöglichkeiten fast unbegrenzt sind. Die auf die zu dekorierende Oberfläche aufgetragenen Pailletten können nach dem Brand opak oder transparent, farblos oder eingefärbt, matt oder glänzend sein; zudem können die dekorierten Gegenstände sprenkelartige, metallische, irisierende oder wolkenartige Effekte aufweisen. Außerdem kann die mit Pailletten dekorierte Fläche ein reliefartiges Aussehen haben.

Die beiden Hauptbestandteile der erfindungsgemäßen Pailletten sind (i) ein organisches Bindemittelsystem, das während des Brennens der mit Pailletten dekorierten Gegenstände vollkommen verbrennt und sich verflüchtigt, ohne Fehler im Dekor zu verursachen, sowie (ii) ein verglasbarer anorganischer Stoff, der nicht verbrennt und das eigentliche dekorative Element darstellt. Die Pailletten können außerdem, und das wird unter "im wesentlichen" verstanden, geringe Mengen Verarbeitungszusätze und/oder modifizierende Komponenten enthalten, mit denen die stofflichen Eigenschaften der Pailletten eingestellt werden, wobei diese Zusätze insgesamt üblicherweise weniger als 20 Gew.-%, vorzugsweise weniger als 10 Gew.-%, betragen. Die Pailletten müssen vor dem Brand eine gute Festigkeit und gleichzeitig eine gewisse Elastizität besitzen, damit sie während des Transports und der Bearbeitung nicht zerbrechen.

Unter den Verarbeitungszusätzen können genannt werden: Trocknungs- und Polymerisationsbeschleuniger für das Bindemittel, wie Metallverbindungen (zum Beispiel Co-Naphtenate) für die Polymerisation von Alkydharzen und Photoinitiatoren für Bindemittelsysteme für die UV-Polymerisation. Andere Zusatzstoffe können die rheologischen Eigenschaften der Paste, von der zur Herstellung der Pailletten zunächst ein Film oder Blättchen (Schuppen) gefertigt werden, beeinflussen: Zu dieser Gruppe gehören Lösungsmittel, wie zum Beispiel Glykole, Glykolether, Ester, Terpenalkohole und aromatische Kohlenwasserstoffe, Thixotropierungsmittel, Zusätze zur Erhöhung der Viskosität wie zum Beispiel Polyalkylenglykole, Cellulose- und Stärkemehlverbindungen, Polyvinylalkohol und Polyvinylpyrrolidon, sowie Benetzungsmittel. Von den Modifikatoren sind insbesondere die Weichmacher zu nennen; im allgemeinen können die klassischen, dem Fachmann für ihren Einfluß auf die jeweiligen Bindemittelsysteme bekannten Weichmacher verwendet werden, insbesondere Phthalsäureester, (C₄-C₁₂)-Dicarbonsäureester und Fettsäureester, ebenso Phosphorsäureester, Polyethylenglykole und Polyproplyenglykole sowie ihre Monoether.

Das organische Bindemittelsystem muß in ausreichendem Maße filmbildend sein, um zu gewährleisten, daß sich auch bei einem hohen Anteil an anorganischem dekorbildenden Stoff ein Film oder Blättchen bilden können. Das Bindemittelsystem der polymerisierten Pailletten besteht aus einem oder mehreren hochmolekularen Stoffen, die Polymerisations-, Polykondesations- oder Polyadditionsprodukte und zum Teil vernetzt sein können. Vorzugsweise werden Polymere und Copolymere auf Basis von Polyacrylsäureestern und Polymethacrylaten, insbesondere Polymere und Copolymere auf Basis von Butylmethacrylat, Polyvinylacetat und Polyvinylbutyral verwendet. In den netzwerkbildenden Systemen, die aus klassischen UV-Polymerisations-Bindemitteln bestehen, können die Vernetzungsmittel multifunktionelle Vinylverbindungen sein, wie Di-, Tri- oder Tetracrylate oder Methacrylate, zum Beispiel Mono-, Di- oder Triethylenglycol(meth)acrylat, Hexamethylendi(meth)acrylat oder Trimethylolpropantri(meth)acrylat.

Das Bindemittelsystem kann zusätzlich zu den obengenannten Polymeren/Copolymeren (Polymer- oder Copolymerharzen) oder anstelle dieser Produkte weitere filmbildende Harze enthalten, wie Polyesterharze oder Polyurethanharze oder Urethan modifizierte Acryl- oder Methacrylharze.

Die verglasbaren Produkte für die Herstellung der Dekore bestehen aus unterschiedlichen Stoffen, die allein oder in Kombination vorliegen. Zu nennen sind Glasfritten oder Glasuren, die transparent, opak, eingefärbt oder farblos sein und bei Temperaturen zwischen 500°C (Anwendung für Glas) und 1450°C (Anwendung für Porzellan) eingebrannt werden können; weiße oder eingefärbte anorganische Pigmente auf der Basis von Metalloxiden und -sulfiden, Mischoxidsystemen, Silikaten, Phosphaten, Perlglanzpigmente (Iriodine®), wie solchen auf Glimmerbasis, Pigmente mit interstitieller Struktur (wie zum Beispiel ZrSiO₄ (V) und ZrSiO₄(Pr)) und Einschlußpigmente (wie zum Beispiel Cd(S,Se) in ZrSiO₄); Trübungsmittel wie zum Beispiel ZrO₂, ZrSiO₄, SiO₂, Aluminiumsilikat; Schmelzfarben, Aufglasur- und Unterglasur-Farben zur Dekoration von Porzellan; Engoben oder jedes andere keramische Material. Der zur Bildung des Dekors dienende Stoff enthält ein verglasbares und unter gewissen Brennbedingungen schmelzbares Material, insbesondere eine oder mehrere Glasfritten oder eine Keramikglasur. Es wird besonders empfohlen, daß sich der dekorbildende Stoff im wesentlichen aus einer Mischung aus weißen und eingefärbten Pigmenten und/oder Metalloxiden und einem bei einer Brenntemperatur von 500 bis 1450°C schmelzbaren Produkt zusammensetzt.

Die Schichtdicke der Pailletten liegt vorzugsweise zwischen 25 und 1000 x 10⁻⁶m, insbesondere zwischen 25 und 500 x 10⁻⁶m; die Pailletten bestehen im wesentlichen aus 10 bis 40 Gew.-% eines organischen Bindemittelsystems und zu 50 bis 90 Gew.-%, vorzugsweise 60 bis 90 Gew.-% eines anorganischen dekorbildenden Stoffes. Zusätze dürfen, wie vorher erwähnt, insgesamt 20 Gew.-%, vorzugsweise 10 Gew.-%, nicht übersteigen.

Das Verfahren zur Herstellung der Pailletten ist einfach. Es besteht darin, ein flüssiges oder pastöses oder gelöstes oder in einem Lösungsmittelsystem emulgiertes Bindemittel auf der Basis von Polymer- oder Copolymerharzen und/oder Polykondensationsharzen und/oder Polyadditionsharzen oder Bindemittelvorprodukten, wie vorzugsweise Prepolymere und/oder polymerisierbare Monomere mit vernetzbaren Verbindungen, mit einem dekorbildenden verglasbaren anorganischen Stoff, und, falls erforderlich, mit Zusätzen wie Weichmacher, Trocknungsbeschleuniger, Photoinitiatoren, Lösungsmittel und Viskositätseinsteller homogen zu mischen, aus dieser Mischung einen Film oder Blättchen (Schuppen) zu bilden und nach der Polymerisation Pailletten der gewünschten Form zu erzeugen, wobei dies vorzugsweise durch Brechen, Schneiden oder Ausstanzen geschieht.

Zur Herstellung der Pailletten verwendet man Bindemittelsysteme in flüssiger oder pastöser Form, wie sie oben beschrieben wurden, d.h., sie sind gegebenenfalls noch nicht polymerisiert und auch nicht vernetzt.

Das Bindemittelsystem oder seine Vorprodukte, die anorganischen Stoffe zur Bildung des Dekors und, falls erforderlich, die Zusätze, wie wäßrige oder nicht wasserlösliche Lösungsmittel und Weichmacher, werden in herkömmlichen Apparaturen (etwa in einem Intensivmischer oder Dreizylinder-Walzenstuhl) gemischt und homogenisiert. Die aus der Mischung hervorgehende Paste wird mit Hilfe bekannter Techniken wie Gießen, Strangziehen, Walzen, zu Blättchen oder Schuppen weiterverarbeitet und anschließend polymerisiert. Die Polymerisation der Blättchen oder Schuppen kann durch herkömmliche Trocknung erfolgen, während der größte Teil der eventuell vorhandenen Lösungsmittel verdunstet, oder durch eine Vernetzungsreaktion zwischen den reaktiven Gruppen eines Prepolymers auf Basis eines Polymers oder Copolymers, eines thermoplastischen Polyesters oder eines Polyurethans und den entsprechenden Vernetzungsbestandteilen oder durch UV-Polymerisation von monomeren und/oder oligomeren Vinylverbindungen in Anwesenheit von multifunktionellen Vinylverbindungen.

Die für die Herstellung der Pailletten vorzugsweise eingesetzten Bindemittelsysteme sind dem Fachmann bekannte und im Handel erhältliche Druckmedien. Medien dieses Typs enthalten ein polymeres Bindemittel in gelöster oder emulgierter Form, wie Polyacrylat, Polymethacrylat, thermoplastisches Polyurethan, Acrylat/Methacrylat-Copolymer, Styrol/Acrylat- oder Styrol/Methacrylat-Copolymer oder Kombinationen der genannten Klassen. Von den Poly(meth)acrylaten sind insbesondere zu erwähnen Poly-iso- und n-butylmethacrylat, Polymethylmethacrylat sowie Polymethyl-, ethyl- und -butylacrylat, allein oder in Kombination miteinander. Bezüglich der wäßrigen Bindemittelsysteme wird auf die DE-C 42 19 743 verwiesen.

Die Bindemittelsysteme für die UV-Polymerisation eignen sich ebenfalls besonders gut zur Herstellung der Pailletten. Ihre Zusammensetzung kann sehr unterschiedlich sein; doch wird man auch in diesem Fall vorzugsweise Polyacrylate und/oder Polymethacrylate oder Copolymere dieser Stoffe und zusätzlich multifunktionelle Acrylat oder Methacrylat enthaltende Systeme einsetzen - als Beispiel sei hier Medium U in US-A 4,666,756 und EP-B 0 106 628 genannt.

Die Pailletten werden zur Dekoration verschiedener Trägermaterialien aus Glas und Keramik, wie Steingut, Glasmasse, Steinzeug, Porzellan, eingesetzt. Sie können zum Beispiel appliziert werden:
- auf Teile aus Bisquit, geschrühtem Material, mit ungebrannter oder gebrannter Glasur beschichtetem Material,
- während des Pressens von Fliesen aus Pulver (Doppelpreßverfahren),
- als Zusatz zur Paste oder Masse vor der Formgebung (Pulver, weiche Paste, Gießschlicker),
- als Zusatz zur Glasur vor dem Glasiervorgang,
- zum Aufpudern mit der Hand oder maschinell (Streumaschine),
- zum Auftrag mittels Flockenpistole oder jeder anderen bekannten Dekoriertechnik wie zum Beispiel Siebdruck oder Wirbelschichtbett.

Die Pailletten haften im allgemeinen sehr gut auf den zu dekorierenden Flächen; sie fallen weder von vertikalen Wänden noch während des Auftrags oder des Brennens ab. Falls gewünscht, können die Teile vorher mit einer Kleberschicht (CMC- oder Harzsuspension oder jeder andere Kunststoff, der bei niedrigen Temperaturen rückstandslos verbrennt) überzogen werden, womit eine höhere Haftfestigkeit der Pailletten auf dem Gegenstand vor dem Brennen erzielt wird. Die Teile mit den auf der Dekorseite aufgetragenen Pailletten werden dann bei der geforderten Temperatur (500 bis 1450°C) gebrannt, um die Dekoration zu erhalten. Vor dem Brand können die mit Pailletten dekorierten Teile mit einer Glasur überzogen werden; dieses Verfahren wird vorzugsweise dann angewandt, wenn die Pailletten nicht genug Flußmittel enthalten, mit dem sie während des Brennvorgangs auf der Oberfläche haften.

### Beispiel 1

### Zusammensetzung von roten Pailletten zur Dekoration von Gegenständen aus glasiertem Steingut - Brenntemperatur 950°C (traditioneller Brennzyklus 12 h)

| | |
|---|---|
| Transparentglasur (Alkali-Borosilikat) | 43 |
| Rotes Einschlußpigment (System Zr, Si, Cd, S) | 43 |
| Bindemittel: Polyvinylacetat (ohne Lösungsmittel) | 14 |

Das Bindemittel ist Polyvinylacetat (PVAc). Es wird kein Lösungsmittel verwendet.

### Beispiel 2

### Zusammensetzung von braunen Pailletten zur Dekoration von Gegenständen aus glasiertem Steingut - Brenntemperatur 1050°C (Brennzyklus 12 h)

| | |
|---|---|
| Transparentglasur (Alkali-Borosilikat) | 33 |
| Kieselsäure gemahlen (0 - 50 x 10⁻⁶m) | 12 |
| Braunes Einschlußpigment (System Fe, Cr, Zn) | 25 |
| UV-Medium | 30 |

(auf Basis eines n-Butylmethacrylat- und Methylmethacrylat-Copolymers, Dipropylenglycoldiacrylat, Photoinitiator, Dibutylphtalat und Vinylpyrrolidon).

## Patentansprüche

1. Pailletten zur Dekoration von Glas, Porzellan und Keramik,
dadurch gekennzeichnet,
daß sie im wesentlichen aus einem organischen Bindemittelsystem und einem dekorbildenden verglasbaren anorganischen Stoff bestehen und erhältlich sind aus einem Film oder Blättern der genannten Zusammensetzung.

2. Pailletten nach Anspruch 1,
dadurch gekennzeichnet,
daß sich das organische Bindemittelsystem im wesentlichen zusammensetzt aus einem oder mehreren Polymeren oder Copolymeren aus der Reihe der Polyacrylate, Polymethacrylate, Polyvinylacetate oder Polyvinylbutyrate, welche zum Teil auch mit multifunktionellen Vinylverbindungen vernetzt sein können.

3. Pailletten nach Anspruch 2,
dadurch gekennzeichnet,
daß das verglasbare Material in Form einer opaken oder transparenten Glasfritte vorliegt, die eingefärbt oder farblos sein kann.

4. Pailletten nach Anspruch 3,
dadurch gekennzeichnet,
daß der dekorbildende anorganische Stoff zusätzlich ein oder mehrere anorganische Pigmente und/oder Metalloxide, -phosphate oder -silikate enthält.

5. Pailletten nach einem der Ansprüche 1 bis 4,
dadurch gekennzeichnet,
daß sie eine Dicke von 25 bis 1000 x 10⁻⁶m besitzen und im wesentlichen 10 bis 40 Gew.-% eines organischen Bindemittels, 50 bis 90 Gew.-% eines anorganischen dekorbildenden Stoffes sowie 0 bis 10 Gew.-% Zusatzstoffe enthalten.

6. Verfahren zur Herstellung von Pailletten zur Dekoration von Glas, Porzellan und Keramik gemäß einem der vorstehenden Ansprüche,
dadurch gekennzeichnet,
daß man ein flüssiges oder pastöses oder in einem Lösungsmittelsystem gelöstes oder suspendiertes organisches Bindemittel auf der Basis von Polymer- oder Copolymerharzen und/oder Polykondensationsharzen und/oder Polyadditionsharzen oder Vorprodukten der Bindemittelsysteme mit einem dekorbildenden verglasbaren anorganischen Stoff und, falls erforderlich, mit Zusatzmitteln, wie Weichmacher, Trocknungsbeschleuniger, Photoinitiatoren, Lösungsmittel und Viskositätseinstellmittel homogen mischt, diese Mischung in einen Film oder Blättchen (Schuppen) überführt und hieraus nach der Polymerisation Pailletten der gewünschten Form gewinnt.

7. Verfahren nach Anspruch 6,
dadurch gekennzeichnet,
daß man als dekorbildenden anorganischen Stoff eine Mischung aus mindestens einer oder mehreren Glasfritten und einem oder mehreren anorganischen Pigmenten und/oder Metalloxiden, -phosphaten oder -silikaten verwendet.

8. Verfahren nach Anspruch 6 oder 7,
dadurch gekennzeichnet,
daß man als organisches Bindemittel ein System auf Basis von Acryl- und/oder Methacrylharzen und, falls eine Vernetzung gewünscht wird, einem Di- oder Trimethacrylat oder Di- oder Triacrylat als Netzmittel verwendet.

9. Verfahren zur Dekoration von Glas, Porzellan und Keramik durch Auftrag fester Stoffe in Form kleiner Partikel auf die zu dekorierende Oberfläche und anschließendem Brand bei einer Temperatur zwischen 500 und bis 1430 °C,
dadurch gekennzeichnet,
daß man als Feststoffe in Form kleiner Partikel Pailletten nach einem der Ansprüche 1 bis 5 verwendet.

10. Verfahren nach Anspruch 9,
dadurch gekennzeichnet,
daß man auf die zu dekorierende Oberfläche zuerst eine Haftmittellösung, die während des Brandes völlig verdampft, und anschließend die Pailletten auf das Haftmittel aufgeträgt.

## Claims

1. Paillettes for the decoration of glass, porcelain and ceramics,
characterised in that
they consist substantially of an organic binder system and of a decorative vitrifiable inorganic substance and are obtainable from a film or from sheets of the above-mentioned composition.

2. Paillettes according to claim 1,
characterised in that
the organic binder system consists substantially of one or more polymers or copolymers from among the polyacrylates, polymethacrylates, polyvinyl acetates or polyvinyl butyrates, which may also be to some extent cross-linked by means of multifunctional vinyl compounds.

3. Paillettes according to claim 2,
characterised in that
the vitrifiable material is in the form of an opaque or transparent glass frit, which may be coloured or colourless.

4. Paillettes according to claim 3,
characterised in that
the decorative inorganic substance contains in addition one or more inorganic pigments and/or metal oxides, metal phosphates or metal silicates.

5. Paillettes according to one of claims 1 to 4,
characterised in that
they have a thickness of from 25 to 1000 x 10⁻⁶ m and contain substantially 10 to 40 wt.% of an organic binder, 50 to 90 wt.% of an inorganic decorative substance and 0 to 10 wt.% additives.

6. Process for the production of paillettes for the decoration of glass, porcelain and ceramics according to one of the preceding claims,
characterised in that
an organic binder which is liquid or paste-like or dissolved or suspended in a solvent system and is based on polymer resins or copolymer resins and/or polycondensation resins and/or polyaddition resins, or intermediates of the binder systems, is or are homogeneously mixed with a decorative vitrifiable inorganic substance and, if necessary, with additives, such as plasticisers, drying accelerators, photoinitiators, solvents and agents for adjusting viscosity, this mixture is converted into a film or sheet (flakes) and from these paillettes of the required form are obtained after the polymerisation.

7. Process according to claim 6,
characterised in that
a mixture of at least one or more glass frits and one or more inorganic pigments and/or metal oxides, metal phosphates or metal silicates is used as the decorative inorganic substance.

8. Process according to claim 6 or 7,
characterised in that
a system based on acrylic resin and/or methacrylic resin is used as organic binder and, if cross-linking is required, a di- or trimethylacrylate or di- or triacrylate is used as cross-linking agent.

9. Process for decorating glass, porcelain and ceramics by application of solid substances in the form of small particles to the surface to be decorated and subsequent firing at a temperature of from 500°C up to 1430°C,
characterised in that
paillettes according to one of claims 1 to 5 are used as solid substances in the form of small particles.

10. Process according to claim 9,
characterised in that
first of all an adhesive solution, which is completely vaporised during the firing, is applied to the surface to be decorated, and then the paillettes are applied to the adhesive.

## Revendications

1. Paillettes pour décorer le verre, la porcelaine et la céramique,
caractérisées en ce qu'
elles sont constituées essentiellement d'un système de liant organique et d'une substance minérale vitrifiable formant un décor et qu'on peut les obtenir à partir d'un film ou de feuilles de la composition citée.

2. Paillettes selon la revendication 1,
caractérisées en ce que
le système de liant organique se compose essentiellement d'un ou plusieurs polymères ou copolymères de la série des polyacrylates, polyméthacrylates, poly(acétates de vinyle) ou poly(butyrate vinylique) qui peuvent être aussi en partie réticulés avec des composés vinyliques polyfonctionnels.

3. Paillettes selon la revendication 2,
caractérisées en ce que
le matériau vitrifiable peut se présenter sous la forme d'une fritte de verre opaque ou transparente, qui peut être colorée ou incolore.

4. Paillettes selon la revendication 3,
caractérisées en ce que
la substance minérale formant le décor contient en plus un ou plusieurs pigments minéraux et/ou des oxydes, des phosphates ou des silicates de métaux.

5. Paillettes selon l'une des revendications 1 à 4,
caractérisées en ce qu'
elles possèdent une épaisseur de 25 à 1000 x 10⁻⁶ m et contiennent essentiellement 10 à 40 % en poids d'un liant organique, 50 à 90 % en poids d'une substance minérale formant le décor ainsi que 0 à 10 % en poids d'additifs.

6. Procédé de production de paillettes pour décorer du verre, de la porcelaine ou de la céramique selon l'une des revendications précédentes,
caractérisé en ce qu'
on mélange de façon homogène un liant organique liquide ou pâteux ou dissous ou en suspension dans un système solvant à base de résines polymères ou copolymères et/ou de résines de polycondensation et/ou de résines de polyaddition ou de précurseurs des systèmes de liants avec une substance minérale vitrifiable formant le décor, et si c'est nécessaire avec des additifs comme des plastifiants, des accélérateurs de séchage, des photoinitiateurs, des solvants et des régulateurs de viscosité, on forme à partir de ce mélange un film ou des lamelles (écailles) et après la polymérisation produite à partir d'eux des paillettes de la forme souhaitée.

7. Procédé selon la revendication 6,
caractérisé en ce qu'
on utilise comme substance minérale formant le décor un mélange d'au moins une ou plusieurs frittes de verre et d'un ou plusieurs pigments minéraux et/ou d'oxydes, de phosphates ou de silicates de métaux.

8. Procédé selon la revendication 6 ou 7,
caractérisé en ce qu'
on utilise comme liant organique un système à base de résines acryliques et/ou méthacryliques et si une réticulation est souhaitée, on utilise comme agent de réticulation un di- ou triméthacrylate ou un di- ou triacrylate.

9. Procédé de décoration de verre, de porcelaine et de céramique par le dépôt de substances solides sous forme de petites particules sur la surface à décorer et cuisson consécutive à une température comprise entre 500 et 1430°C,
caractérisé en ce qu'
on utilise comme solides sous forme de petites particules des paillettes selon l'une des revendications 1 à 5.

10. Procédé selon la revendication 9,
caractérisé en ce qu'
on dépose d'abord sur la surface à décorer une solution d'agent d'adhérence qui s'évapore complètement pendant la cuisson, et qu'ensuite on dépose les paillettes sur l'agent d'adhérence.
